# EUROPÄISCHE PATENTSCHRIFT

(11) **EP 3 275 301 B1**
(45) Veröffentlichungstag und Bekanntmachung des Hinweises auf die Patenterteilung: **01.01.2020**
(21) Anmeldenummer: 17401077.7
(22) Anmeldetag: 14.07.2017
(51) Int. Cl.: A01C 15/00, A01C 7/08, A01C 7/12

(54) **LANDWIRTSCHAFTLICHE SÄMASCHINE MIT RÜHREINRICHTUNG**
AGRICULTURAL SEEDING MACHINE WITH STIRRER
SEMOIR AGRICOLE POURVU D'UN DISPOSITIF AGITATEUR

(30) Priorität: 25.07.2016 DE 102016113619
(43) Veröffentlichungstag der Anmeldung: 31.01.2018
(73) Patentinhaber: Amazonen-Werke H. Dreyer GmbH & Co. KG, 49205 Hasbergen (DE)
(72) Erfinder: Brüggemann, Klaus, 27777 Ganderkesee (DE); Stier, Roy, 26121 Oldenburg (DE)

(56) Entgegenhaltungen:
- WO-A1-84/00465
- DE-A1- 2 003 976
- GB-A- 2 026 447

## Beschreibung

Die Erfindung betrifft eine landwirtschaftliche Sämaschine gemäß des Oberbegriffes des Patentanspruches 1.

Eine derartige Sämaschine weist typischerweise eine Rühreinrichtung auf, um ein Verklumpen von Saatgut, insbesondere im Auslaufbereich des Vorratsbehälters, zu vermeiden. Eine solche Rühreinrichtung ist in DE 1 950 873 U1 beschrieben. Die Rühreinrichtung ist als angetriebene Rührwelle ausgeführt und weist eine Vielzahl von Rührelementen auf, welche entlang der Rührwelle angeordnet sind. Diese sind lösbar an der Rührwelle befestigt. Dadurch können sie für verschiedene Saatgüter entsprechend des Bedarfs an der Rührwelle angebaut oder nicht angebaut sein. Die beschriebenen Rührelemente bestehen aus Federdraht und weisen mehrere gebogene und/oder abgeknickte Teile auf.

Die derart ausgeführten Rührelemente ragen von der Rührwelle ausgehend finger- oder maschenartig in den Vorratsbehälter und rührend dabei bei Rotation der Rührwelle durch das im Vorratsbehälter bevorratete Saatgut. Nachteilig dabei ist, dass die finger- oder maschenartig in den Vorratsbehälter ragenden Rührelemente Kanten und/oder Maschen aufweisen, an denen sich Gegenstände verhaken können. Dadurch besteht die Gefahr, dass diese Gegenstände in die Rührwelle eingezogen werden.

Es ist denkbar, dass ein Bediener der Sämaschine Arbeiten in der Nähe der rotierenden Rühreinrichtung durchführen muss. Beispielsweise aufgrund Unachtsamkeit können seine Hände, Finger und/oder Teile seiner Kleidung von den Kanten der Rührelemente erfasst und somit von den Rührelementen eingezogen werden. Dies führt zur Gefahr erheblicher Verletzungen des Bedieners und ist daher unbedingt zu vermeiden.

In analoger Weise können auch Werkzeuge des Bedieners durch dessen Unachtsamkeit mit den Rührelementen in Kontakt kommen und eingezogen werden. Hierdurch entsteht die Gefahr kostspieliger Beschädigungen der Rühreinrichtung.

Überdies besteht insbesondere bei grobkörnigem Saatgut die Gefahr, dass durch die beschriebene Ausgestaltung der Rührelemente große Körner des grobkörnigen Saatguts zerdrückt werden können. Dadurch würde ein Teil des bevorrateten Saatguts verloren gehen. Die Überreste der zerbrochenen Körner verunreinigen in der Folge die Dosierorgane, Förderleitungen und/oder Ausbringelemente.

Die GB 2 026 447 A zeigt scheibenartige Rührelemente, welche in einem Winkel zu ihrer Rotationsachse angestellt sind. Eine Rührwirkung wird hier dadurch erzielt, dass die angestellten Rührelemente das zu rührende Material axial bewegen. Derart ausgeführte Rührelemente benötigen im Betrieb innerhalb des Vorratsbehälters viel Raum und beseitigen nicht die beschriebene Verletzungsgefahr, da durch die raumgreifende Bewegung der Rührelemente weiterhin die beschriebene Einzugsgefahr besteht. Weitere Sämaschinen mit den Merkmalen des Oberbegriffs des Anspruchs 1 sind aus den DE 2 003 976 A1 und WO 84/00465 bekannt.

Der Erfindung liegt daher die Aufgabe zugrunde, eine Rühreinrichtung bereit zu stellen, welche frei von den geschilderten Nachteilen ist und ein erheblich reduziertes Verletzungsrisiko für den Bediener aufweist.

Üblicherweise werden angetriebene Teile einer Sämaschine während des Säbetriebes mittels Abdeckgittern dem Zugriff von außen entzogen. Wird diese Abschirmung aber mutwillig vom Bediener entfernt, bestehen die beschriebenen Gefahren fort. Zusätzlich fügen derartige Abdeckgitter dem Inneren des Vorratsbehälters zusätzliche Kanten hinzu, an welchen sich Saatgut verfangen kann. Dadurch werden die Verluste gesteigert, weswegen alternative Lösungen vorzuziehen sind.

Die Aufgabe der Erfindung wird durch eine landwirtschaftliche Sämaschine mit den Merkmalen des Anspruchs 1 gelöst.

Durch die scheibenartige Ausgestaltung des Rührelements wird erreicht, dass das Rührelement keine Kanten und/oder Maschen aufweist, an/in denen sich ein Bediener verfangen kann. Dadurch werden die Einzugsgefahr und die Verletzungsgefahr erheblich reduziert.

In analoger Weise wird ebenso die Gefahr verringert, dass sich Werkzeug in den Rührelementen verfangen und diese somit beschädigen kann. Auch größere Körner eines grobkörnigen Saatguts, wie beispielsweise Mais, können nicht mehr zerdrückt werden, da keine Kanten und/oder Maschen vorhanden sind, an/in denen sie eingekeilt werden können.

Die Rühreinrichtung dient mittels der Rührwirkung typischerweise der Auflockerung des im Vorratsbehälter bevorrateten Saatgut, insbesondere im Auslaufbereich in der Nähe der Dosierorgane. Dadurch werden gleichbleibende Fließeigenschaften eine konstante Dosierung des Saatguts sichergestellt.

Erfindungsgemäß wird ein besonderer Vorteil dadurch erreicht, dass das scheibenartige Element zumindest ein Formelement aufweist, welches bei Durchgang durch das bevorratete Saatgut eine Rührwirkung bewirkt. Die auflockernde Rührwirkung wird somit durch an dem scheibenartig ausgeführten Rührelement angeordnete Formelemente bewirkt. Diese Formelemente sind abgerundet ausgestaltet. Dies ist vorteilhaft, da dadurch auch von den Formelementen keine Einzugs- und/oder Verletzungsgefahr ausgeht. Die Formelemente sind Erhebungen und/oder Aussparungen des scheibenartigen Rührelements ausgestaltet.

Ein weiterer Vorteil wird erfindungsgemäß erreicht, indem das zumindest eine Formelement seitlich an dem scheibenartigen Element angeordnet ist. Durch diese Anordnung werden Kanten effektiv vermieden. Bei einer Anordnung von Formelementen entlang der Umfangsrichtung des scheibenartigen Rührelements treten in Umfangs- bzw. Rotationsrichtung des scheibenartigen Rührelements Erhebungen auf, an welchen sich der Bediener in der beschriebenen Weise verfangen und/oder verletzen kann. Bei einer Anordnung der Formelemente seitlich an der Scheibe besteht diese Gefahr nicht. Dennoch wird die vorgesehene auflockernde Rührwirkung erreicht. Die seitliche Anordnung der Formelemente trägt daher erheblich zur Steigerung der Sicherheit des Rührelements bei.

Es ist von Vorteil, dass die Rührwirkung über die Anzahl, die Anordnung und/oder die Form der Formelemente auf dem scheibenartigen Element einstellbar ist. Die Wahrscheinlichkeit von Verklumpungen des bevorrateten Saatguts ist abhängig von seinen Fließeigenschaften. Schlecht fließfähiges Saatgut verklumpt schneller als gut fließfähiges. Die Rühreigenschaften der Rührelemente hängen von der Anzahl, Anordnung und Form der Formelemente ab, da diese Formelemente dem Rührelement seine charakteristische Form geben und zum Durchgang durch das bevorratete Saatgut vorgesehen sind. Daher weisen scheibenartige Rührelemente mit verschiedener Anzahl, Anordnung und/oder Form der Formelemente verschiedene Rühreigenschaften auf. So kann die Rühreinrichtung mit den für eine anstehende Arbeitsaufgabe geeigneten Rührelementen Ausgestattet werden.

Alternativ ist eine Anzahl, Anordnung und/oder Form der Formelemente auf dem scheibenförmigen Rührelement denkbar, die für eine Vielzahl verschiedener bevorrateter Saatgüter eine qualitativ gleichbleibend gute Rührwirkung erzielt. Dadurch wird ein universell einsetzbares Rührelement geschaffen.

Es ist vorteilhaft, dass das scheibenartige Rührelement aus Kunststoff und/oder Metall besteht und eine glatte Oberfläche aufweist. Durch die glatte Oberfläche wird die Wahrscheinlichkeit von Anhaftungen gesenkt und das Rührelement nicht verschmutzt. Zerdrückte Körner beispielsweise können an den Aussparungen und/oder Erhebungen des scheibenartigen Rührelements anhaften und somit die Rührwirkung beeinträchtigen.

Kunststoff und Metall sind leicht formbare Werkstoffe. Daher sind sie besonders flexibel einsetzbar. Kunststoff ist zudem ein besonders leichter und kostengünstiger Werkstoff, sodass durch seine Verwendung die erfindungsgemäße Rühreinrichtung kosten- und energieeffizient produziert werden kann. Metall hingegen ist besonders verschleißfest, sodass die Lebensdauer eines aus Metall gefertigten Rührelements besonders lang ist.

Es ist vorteilhaft, dass das scheibenartige Element mittels einer Schraub- und/oder Steckverbindung an der Rühreinrichtung lösbar befestigt ist. Durch eine derartige Schraub- und/oder Steckverbindung wird eine sichere und zuverlässige Verbindung erreicht. Die Lösbarkeit stellt sicher, dass das Rührelement bei Bedarf leicht austauschbar ist. Die Rührelemente können zu Wartungszwecken und/oder bei Verschleiß einzeln oder sämtlich entfernt und/oder ausgetauscht werden. Ebenso ist auf diese Weise ein Anpassen der Rühreinrichtung an eine bevorstehende Arbeitsaufgabe denkbar, beispielsweise wenn die Anzahl der Rührelemente verändert und/oder nach dem Ausbringen eines feinkörnigen Saatguts ein grobkörniges ausgebracht werden und dazu der Rührelementetyp verändert werden soll.

Weist die Sämaschine mehrere Dosierorgane und die Rühreinrichtung mehrere Rührelemente auf, ist es vorteilhaft, dass jedem Dosierorgan ein Rührelement zugeordnet und das jeweilige Rührelement oberhalb des Dosierorgans angeordnet ist. Auf diese Weise ist eine gleichmäßige Rührwirkung sichergestellt und jedem Dosierorgan wird ein gleichmäßig fließender Saatgutstrom zugeführt. Somit werden Unregelmäßigkeiten bei der Saatgutabgabe an die Ausbringelemente vermieden und ein homogenes Saatbild erreicht.

Ist die Rühreinrichtung als Rührwelle ausgeführt, ist es vorteilhaft, dass zumindest ein scheibenartiges Element entlang der Achse der Rührwelle angeordnet ist. Eine Rührwelle treibt alle an der Rührwelle befestigten Rührelemente in einfacher und zuverlässiger Weise gleichmäßig an. Mittels einer als Rührwelle ausgeführten Rühreinrichtung lassen sich in einfacher Weise mehrere Rührelemente nebeneinander anordnen. Sind beispielsweise mehrere Dosierorgane nebeneinander angeordnet, lässt sich mittels einer Rührwelle jedem dieser Dosierorgane ein Rührelement zuordnen.

Es wird ein Vorteil dadurch erreicht, dass das zumindest eine scheibenartige Element senkrecht zur Achse der Rührwelle orientiert ist. Auf diese Weise können die Rührelemente in einfacher Weise auf der Rührwelle angeordnet und befestigt werden.

Alternativ wird ein weiterer Vorteil dadurch erreicht, dass das zumindest eine scheibenartige Element einen Winkel zwischen Null und 90° mit der Achse der Rührwelle einschließt. Durch die Rotation der Rührwelle erfahren die Außenbereiche der scheibenartigen Rührelemente eine periodische Translation entlang der Rotationsachse der Rührwelle. Hierdurch wird eine zusätzliche Rührwirkung erreicht. Eine Rührwirkung wird hierdurch aber selbst dann erreicht, wenn auf den scheibenartigen Rührelementen keine Formelemente angeordnet sind.

Es ist vorteilhaft, dass auf dem scheibenartigen Element vier Formelemente angeordnet sind. Auf diese Weise wird mithilfe einer besonders einfachen Anordnung der Rührelemente eine gleichmäßige Rührwirkung erzielt.

Weitere Einzelheiten der Erfindung sind der Beispielsbeschreibung und den Zeichnungen zu entnehmen. Die Zeichnungen zeigen
- Fig.1: den Vorratsbehälter einer landwirtschaftlichen Sämaschine im Querschnitt,
- Fig.2: den Vorratsbehälter einer landwirtschaftlichen Sämaschine in perspektivischer Darstellung von schräg hinten,
- Fig.3: die Rührwelle einer landwirtschaftlichen Sämaschine mit rechtwinklig angeordneten Rührelementen,
- Fig.4: die Rührwelle einer landwirtschaftlichen Sämaschine mit nicht rechtwinklig angeordneten Rührelementen,
- Fig.5: ein scheibenartiges Rührelement in seitlicher Ansicht,
- Fig.6: ein scheibenartiges Rührelement in einer Ansicht von oben und
- Fig.7: ein scheibenartiges Rührelement in perspektivischer Ansicht.

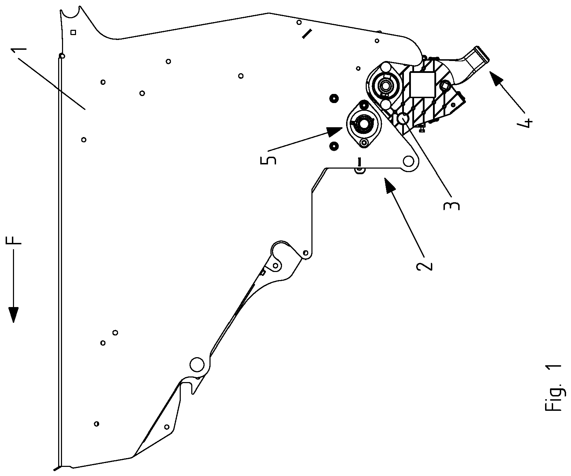

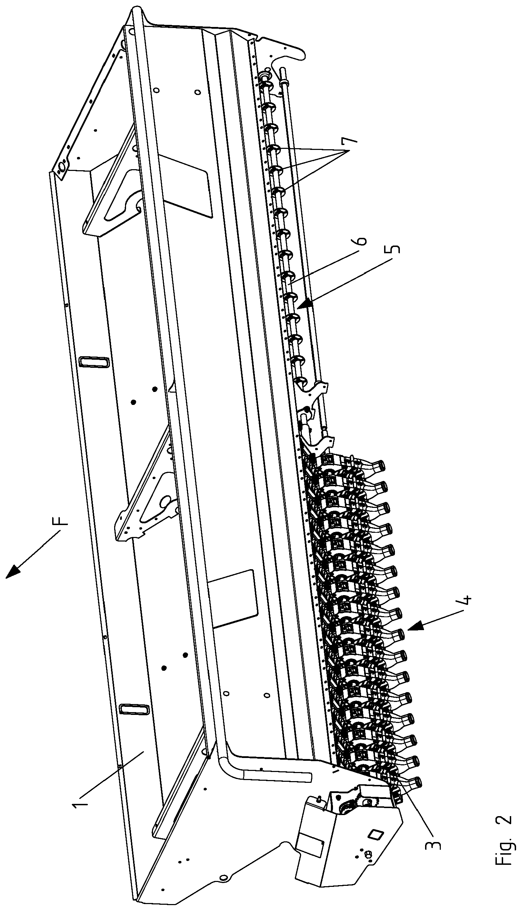

Eine landwirtschaftliche Sämaschine, weist einen Vorratsbehälter 1 zur Bevorratung von zu verteilendem Material, vorzugsweise Saatgut und/oder Düngemittel, auf. Ein derartiger Vorratsbehälter 1 ist in den Fig. 1 und 2 gezeigt. Der Vorratsbehälter stützt sich auf einem nicht dargestellten Rahmen der landwirtschaftlichen Sämaschine ab, wobei die Sämaschine zum Anbau oder Anhängen an eine nicht dargestellte landwirtschaftliche Zugmaschine vorgesehen ist.

Der Vorratsbehälter 1 weist einen Auslaufbereich 2 auf. Unterhalb des Auslaufbereichs 2 ist eine Vielzahl von Dosierorganen 3 angeordnet. Die Dosierorgane 3 dienen der Einspeisung des auszubringenden Saatguts in zu Ausbringelementen führende Förderleitungen 4.

Im unteren Bereich des Vorratsbehälters 1 ist oberhalb der Dosierorgane 3 eine Rühreinrichtung 5 angeordnet. Im Beispiel der Fig. 1 bis 4 ist die Rühreinrichtung 5 als drehbar gelagerte Rührwelle 6 ausgeführt. Die Rührwelle 6 ist horizontal quer zur Fahrtrichtung F angeordnet und erstreckt sich über die gesamte Breite des Vorratsbehälters 1.

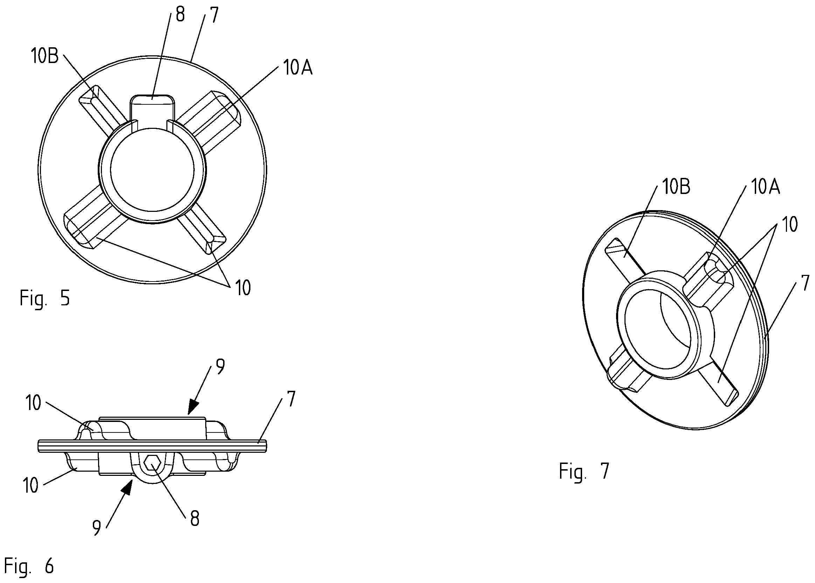

Entlang der Rührwelle 6 sind äquidistant beabstandet zueinander Rührelemente 7 angeordnet und drehfest befestigt. Zur Befestigung an der Rührwelle 6 weisen die Rührelemente 7 einen Aufnahmebereich 8 zur Aufnahme eines Befestigungselements auf, gezeigt in den Fig. 5 und 6. Geeignete Befestigungselemente sind beispielsweise Schrauben oder Bolzen. Durch derartige Befestigungselemente wird eine zuverlässige und zugleich lösbare Befestigung der Rührelemente 7 an der Rührwelle 6 erreicht.

Durch die lösbare Befestigung der Rührelemente 7 an der Rührwelle 6 können die Rührelemente 7 im Wartungs- und/oder Verschleißfall in einfacher Weise ausgetauscht werden. Zudem können, entsprechend der bevorstehenden Arbeitsaufgabe, Rührelemente 7 geeigneten Typs und/oder in geeigneter Anzahl an der Rührwelle 6 angeordnet werden.

Mittels Rotation der Rührwelle 6 werden Rührelemente 7 in Rotation um die Rotationsachse der Rührwelle 6 versetzt. Die Rührelemente 7 dienen der Auflockerung des im Vorratsbehälter 1 bevorrateten Saatguts. Dies vermeidet Verklumpungen und stellt einen gleichmäßigen Saatgutfluss zu den Dosierorganen 3 sicher.

Die Rührelemente 7 sind scheibenartig ausgeführt, wie es die Fig. 5 bis 7 zeigen. Auf den Seitenflächen 9 der Scheiben sind im gewählten Beispiel je vier Formelemente 10 angeordnet. Wie die Fig. 5 und 7 zeigen, sind die Formelemente 10 als Erhebungen 10A und Aussparungen 10B ausgeführt. Dabei liegen sich je zwei Erhebungen 10A und zwei Aussparungen 10B in radialer Richtung gegenüber. Entlang der Umfangsrichtung bildet sich daher eine alternierende Abfolge von Erhebungen 10A und Aussparungen 10B aus. Die sich auf den verschiedenen Seitenflächen derselben Scheibe, also in Richtung der Rotationsachse gegenüber liegenden Formelemente alternieren ebenfalls, sodass jeder Erhebung 10A eine Aussparung 10B gegenüber liegt.

Die Formelemente 10 bewirken bei ihrem Durchgang durch das bevorratete Saatgut eine das Saatgut auflockernden Rührwirkung.

Die Anzahl, Anordnung und/oder Form der Formelemente 10 ist nicht auf die in den Fig. 5 bis 7 dargestellten Ausführungsformen beschränkt. In analoger Weise sind viele Ausführungsformen und Kombinationen aus Erhebungen 10A und Aussparungen 10B denkbar.

Derartig ausgestaltete Rührelemente 7 sind vielfältig einsetzbar. Durch ihre lösbare Befestigung sind sie entsprechend der bevorstehenden Arbeitsaufgabe austauschbar, sodass bei jedem auszubringenden Saatguttyp eine optimale Rührwirkung erreicht wird. Alternativ kann eine Ausführungsform gefunden werden, welche für viele typischerweise ausgebrachte Saatgüter eine gute Rührwirkung erzielt.

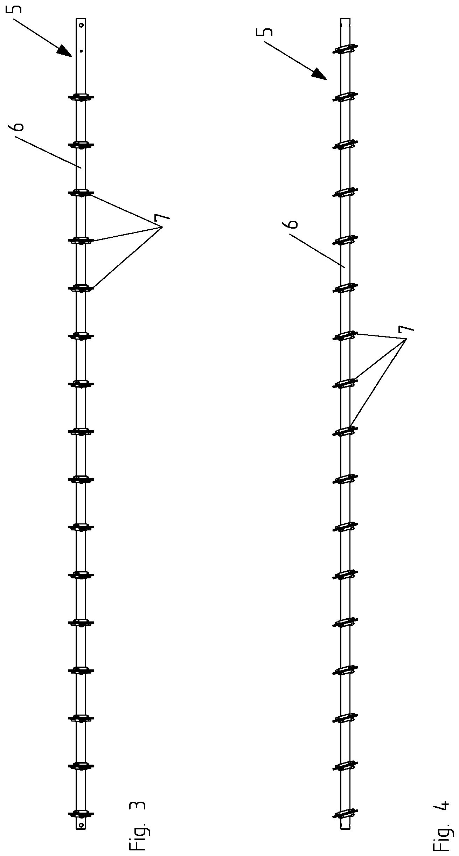

Fig. 3 zeigt eine rechtwinklige Anordnung der scheibenförmigen Rührelemente 7 auf der Rührwelle 6. In besonders einfacher Weise wird somit eine erfindungsgemäße Rühreinrichtung 5 verwirklicht. Die Rührwirkung wird dann ausschließlich über die seitlich an den Scheiben angeordneten Formelemente 10 erreicht.

Fig. 4 zeigt eine Anordnung der scheibenförmigen Rührelemente 7 auf der Rührwelle 6, bei welcher die Scheiben nicht rechtwinklig zur Rührwelle 6 stehen. Aufgrund dieser Geometrie erhalten die Außenbereiche der Scheiben bei Rotation der Rührwelle 6 zusätzlich eine translatorische Bewegungskomponente entlang der Rotationsachse der Rührwelle 6. Diese zusätzliche Bewegungskomponente ist periodisch und bewirkt ihrerseits eine zusätzliche Rührwirkung.

Die scheibenförmigen Rührelemente 7 ermöglichen eine Rührwirkung, ohne dass sich dank der abgerundeten Formen beispielsweise ein Bediener in den Rührelementen verfangen kann. Kleidung und/oder Gliedmaßen können auf diese Weise nicht in die angetriebenen Teile der Rühreinrichtung gezogen werden. Verletzungen des Bedieners werden somit vermieden.

## Patentansprüche

1. Landwirtschaftliche Sämaschine zum Ausbringen von Saatgut und/oder Düngemittel, aufweisend zumindest einen Vorratsbehälter (1) zur Bevorratung des Saatguts und/oder Düngemittels, zumindest einen im unteren Bereich des Vorratsbehälters (1) angeordneten Auslaufbereich (2) mit zumindest einem im Bereich des Auslaufbereichs (2) angeordneten Dosierorgan (3) zur Einspeisung des auszubringenden Saatguts in zu Ausbringelementen führende Förderleitungen (4), wobei im unteren Bereich des Vorratsbehälters (1) oberhalb des zumindest einen Dosierorgans (3) eine Rühreinrichtung (5) angeordnet ist und die Rühreinrichtung (5) mit zumindest einem Rührelement (7) ausgestattet ist, wobei das Rührelement (7) als scheibenartiges Element ausgeführt ist, **dadurch gekennzeichnet, dass** das scheibenartige Element zumindest ein Formelement (10) aufweist, wobei das zumindest eine Formelement (10) als Erhebung (10A) und/oder Aussparung (10B) des scheibenartigen Rührelements (7) ausgestaltet ist, seitlich an dem scheibenartigen Element angeordnet ist und abgerundet ausgestaltet ist.

2. Sämaschine nach Anspruch 1, **dadurch gekennzeichnet, dass** die Rührwirkung über die Anzahl, die Anordnung und/oder die Form der Formelemente (10) auf dem scheibenartigen Element einstellbar ist.

3. Sämaschine nach zumindest einem der vorangegangenen Ansprüche, **dadurch gekennzeichnet, dass** das scheibenartige Rührelement (7) aus Kunststoff und/oder Metall besteht und eine glatte Oberfläche aufweist.

4. Sämaschine nach zumindest einem der vorangegangenen Ansprüche, **dadurch gekennzeichnet, dass** das scheibenartige Element mittels einer Schraub- und/oder Steckverbindung an der Rühreinrichtung (5) lösbar befestigt ist.

5. Sämaschine nach zumindest einem der vorangegangenen Ansprüche, wobei die Sämaschine mehrere Dosierorgane (3) und die Rühreinrichtung (5) mehrere Rührelemente (7) aufweist, **dadurch gekennzeichnet, dass** jedem Dosierorgan (3) ein Rührelement (7) zugeordnet und das jeweilige Rührelement (7) oberhalb des Dosierorgans (3) angeordnet ist.

6. Sämaschine nach zumindest einem der vorangegangenen Ansprüche, wobei die Rühreinrichtung (5) als Rührwelle (6) ausgeführt ist, **dadurch gekennzeichnet, dass** zumindest ein scheibenartiges Element entlang der Achse der Rührwelle (6) angeordnet ist.

7. Sämaschine nach Anspruch 6, **dadurch gekennzeichnet, dass** das zumindest eine scheibenartige Element senkrecht zur Achse der Rührwelle (6) orientiert ist.

8. Sämaschine nach einem der Ansprüche 6 oder 7, **dadurch gekennzeichnet, dass** das zumindest eine scheibenartige Element einen Winkel zwischen Null und 90° mit der Achse der Rührwelle (6) einschließt.

9. Sämaschine nach zumindest einem der vorangegangenen Ansprüche, **dadurch gekennzeichnet, dass** auf dem scheibenartigen Element vier Formelemente (10) angeordnet sind.

## Claims

1. Agricultural seeding machine for dispensing seed and/or fertilizer, having at least one supply container (1) for storing the seed and/or fertilizer, and at least one outlet region (2) which is arranged in the lower region of the supply container (1) and which has at least one metering member (3) which is arranged in the region of the outlet region (2) and intended for feeding the seed to be dispensed into delivery lines (4) leading to dispensing elements, wherein a stirring device (5) is arranged in the lower region of the supply container (1) above the at least one metering member (3), and the stirring device (5) is equipped with at least one stirring element (7), wherein the stirring element (7) is configured as a disc-like element, **characterized in that** the disc-like element has at least one shaped element (10), wherein the at least one shaped element (10) is defined as an elevation (10A) and/or recess (10B) of the disc-like stirring element (7), is arranged laterally on the disc-like element and is of rounded design.

2. Seeding machine according to Claim 1, **characterized in that** the stirring action can be adjusted via the number, the arrangement and/or the shape of the shaped elements (10) on the disc-like element.

3. Seeding machine according to at least one of the preceding claims, **characterized in that** the disc-like stirring element (7) consists of plastic and/or metal and has a smooth surface.

4. Seeding machine according to at least one of the preceding claims, **characterized in that** the disc-like element is releasably fastened to the stirring device (5) by means of a screw connection and/or plug connection.

5. Seeding machine according to at least one of the preceding claims, wherein the seeding machine has a plurality of metering members (3), and the stirring device (5) has a plurality of stirring elements (7), **characterized in that** each metering member (3) is assigned a stirring element (7), and the respective stirring element (7) is arranged above the metering member (3).

6. Seeding machine according to at least one of the preceding claims, wherein the stirring device (5) is configured as a stirring shaft (6), **characterized in that** at least one disc-like element is arranged along the axis of the stirring shaft (6).

7. Seeding machine according to Claim 6, **characterized in that** the at least one disc-like element is oriented perpendicular to the axis of the stirring shaft (6).

8. Seeding machine according to either of Claims 6 and 7, **characterized in that** the at least one disc-like element encloses an angle between zero and 90° with the axis of the stirring shaft (6).

9. Seeding machine according to at least one of the preceding claims, **characterized in that** four shaped elements (10) are arranged on the disc-like element.

## Revendications

1. Semoir agricole pour épandre des semences et/ou des engrais, présentant au moins un réservoir (1) pour le stockage des semences et/ou des engrais, au moins une région de sortie (2) disposée dans la région inférieure du réservoir (1) avec au moins un organe de dosage (3) disposé dans la région de la région de sortie (2) pour introduire les semences à épandre dans des conduits de transport (4) conduisant à des éléments d'épandage, un dispositif agitateur (5) étant disposé dans la région inférieure du réservoir (1) au-dessus de l'au moins un organe de dosage (3), le dispositif agitateur (5) étant muni d'au moins un élément agitateur (7), l'élément agitateur (7) étant réalisé sous la forme d'un élément en forme de disque, **caractérisé en ce que** l'élément en forme de disque présente au moins un élément façonné (10), l'au moins un élément façonné (10) étant réalisé sous forme de rehaussement (10A) et/ou d'évidement (10B) de l'élément agitateur en forme de disque (7), étant disposé latéralement sur l'élément en forme de disque et étant configuré sous forme arrondie.

2. Semoir selon la revendication 1, **caractérisé en ce que** l'effet d'agitation peut être ajusté par le biais du nombre, de l'agencement et/de la forme des éléments façonnés (10) sur l'élément en forme de disque.

3. Semoir selon au moins l'une quelconque des revendications précédentes, **caractérisé en ce que** l'élément agitateur en forme de disque (7) se compose de plastique et/de métal et présente une surface lisse.

4. Semoir selon au moins l'une quelconque des revendications précédentes, **caractérisé en ce que** l'élément en forme de disque est fixé de manière amovible au dispositif agitateur (5) au moyen d'une connexion à vis et/ou à enfichage.

5. Semoir selon au moins l'une quelconque des revendications précédentes, dans lequel le semoir présente plusieurs organes de dosage (3) et le dispositif agitateur (5) présente plusieurs éléments agitateurs (7), **caractérisé en ce qu'**un élément agitateur (7) est associé à chaque organe de dosage (3) et l'élément agitateur respectif (7) est disposé au-dessus de l'organe de dosage (3).

6. Semoir selon au moins l'une quelconque des revendications précédentes, dans lequel le dispositif agitateur (5) est réalisé sous forme d'arbre agitateur (6), **caractérisé en ce qu'**au moins un élément en forme de disque est disposé le long de l'axe de l'arbre agitateur (6).

7. Semoir selon la revendication 6, **caractérisé en ce que** l'au moins un élément en forme de disque est orienté perpendiculairement à l'axe de l'arbre agitateur (6).

8. Semoir selon l'une quelconque des revendications 6 et 7, **caractérisé en ce que** l'au moins un élément en forme de disque forme un angle compris entre 0 et 90 degrés avec l'axe de l'arbre agitateur (6).

9. Semoir selon au moins l'une quelconque des revendications précédentes, **caractérisé en ce que** quatre éléments façonnés (10) sont disposés sur l'élément en forme de disque.
